# FASCICULE DE BREVET EUROPEEN

(11) **EP 0 954 136 B1**
(45) Date de publication et mention de la délivrance du brevet: **13.09.2006**
(21) Numéro de dépôt: 99401040.3
(22) Date de dépôt: 28.04.1999
(51) Int. Cl.: H04L 12/18

(54) **Procédé de télétravail coopératif et dispositif pour la mise en oeuvre du procédé**
Verfahren zur kooperativen Teleheimarbeit und Vorrichtung zur Durchführung des Verfahrens
Method for cooperative teleworking and device for carrying out the method

(30) Priorité: 30.04.1998 FR 9805571
(43) Date de publication de la demande: 03.11.1999
(73) Titulaire: FRANCE TELECOM, 75015 Paris (FR)
(72) Inventeur: Auvray, Patrick, Cabinet Ballot-Schmit, 94230 Cachan (FR); Fabien, Philippe, Cabinet Ballot-Schmit, 94230 Cachan (FR)
(74) Mandataire: Ballot, Paul Denis Jacques

(56) Documents cités:
- GB-A- 2 282 506
- US-A- 4 893 326
- US-A- 5 587 928
- WOGSBERG E.: 'USE OF THE X WINDOW SYSTEM TO MEET SPECIAL OPERATOR CONSOLE REQUIREMENTS' ADVANCES IN INSTRUMENTATION AND CONTROL vol. 49, no. 3, 23 Octobre 1994, INSTRUMENT SOCIETY OF AMERICA, RESEARCH TRIANGLE PARK, US, pages 899 - 910, XP000509000

## Description

La présente invention se rapporte aux procédés qui permettent d'effectuer un télétravail en coopération entre deux ou plusieurs personnes en utilisant des moyens informatiques et des liaisons à travers un réseau de communication. Elle concerne également les dispositifs permettant de mettre en oeuvre ces procédés.

Plus précisément, l'invention concerne, selon un premier de ses aspects, un procédé de télétravail coopératif tel que défini dans le préambule de la revendication 1 et par exemple illustré par le document de brevet GB 2 282 506.

Il arrive fréquemment que plusieurs personnes soient amenées à effectuer un travail en commun en utilisant un logiciel adéquat mis en oeuvre sur un ordinateur, de type " PC " par exemple. Les logiciels utilisés peuvent être de natures très diverses, par exemple un système de traitement de texte, un logiciel de comptabilité, ou un outil de conception assistée par ordinateur (CAO). Le travail consiste aussi bien en discussions sur les manipulations à effectuer qu'en manipulations du logiciel proprement dites.

Dans certains cas une seule personne manipule l'ordinateur en tenant compte des discussions entre tous les intervenants. Dans d'autres cas chacun intervient plus ou moins à son tour pour manipuler l'ordinateur en fonction de ses propres idées. Une telle méthode présente une grande source de confusions et ralentit considérablement la progression du travail.

On a donc imaginé de munir chaque participant d'un terminal d'ordinateur, ou d'un ordinateur individuel travaillant en réseau avec les autres, pour que chacun puisse intervenir individuellement dans le fonctionnement du logiciel, lequel est alors utilisé simultanément par tous les membres du groupe. Pour faciliter les échanges verbaux entre les participants, il est connu d'utiliser un ordinateur individuel du type multimédia muni d'une caméra dirigée vers l'opérateur, d'un micro mis à sa disposition et de moyens sonores tels qu'une paire de mini-enceintes. Le logiciel utilisé est alors affiché sur l'écran de l'ordinateur, qui comporte en outre une fenêtre vidéo dans laquelle apparaît l'image des autres participants, cependant que leur conversation est retransmise par les mini-enceintes. L'image de l'opérateur est reprise par la caméra et ses paroles par le micro pour être elles mêmes transmises aux autres participants. Le système le plus simple est celui où le groupe de travail ne comporte que deux personnes dont les images respectives apparaissent sur l'écran de l'autre, l'ensemble fonctionnant en duplex intégral.

Dans le cas d'un plus grand nombre de participants, des logiciels plus ou moins sophistiqués permettent d'obtenir une commutation plus ou moins automatique entre les différentes images.

On est également parfois amené à enrichir la communication en substituant à l'image des interlocuteurs des images provenant de sources audiovisuelles complémentaires, telles que des caméras pour documents, des scanners vidéo, des magnétoscopes ... Il est alors nécessaire d'utiliser un commutateur audio-vidéo qui permet de sélectionner la source que l'interlocuteur souhaite faire voir à son correspondant.

Ce système est la source de nombreux inconvénients.

Tout d'abord la disposition relative de l'écran et de la caméra, dans laquelle les axes optiques de ces dispositifs sont relativement éloignés l'un de l'autre, en raison de la taille de l'écran, entraîne un effet visuel psychologiquement désagréable qui vient atténuer fortement les avantages que l'on pouvait espérer obtenir d'une communication audiovisuelle entre les correspondants.

En effet, l'opérateur regarde de manière naturelle l'écran, même quant il s'adresse à son correspondant. En raison du grand décalage entre la caméra et l'écran, le correspondant auquel il s'adresse a l'impression que l'opérateur ne le regarde pas, ce qui est une source de gêne et d'incompréhension.

En outre l'incrustation de l'image visiophonique dans l'écran de l'ordinateur s'effectue classiquement de l'une des manières suivantes :
- dans un premier mode de visualisation, on dispose les deux fenêtres de travail (vidéo et logiciel) en mosaïque, c'est à dire l'une à côté de l'autre. On dispose ainsi en permanence de l'image du correspondant et de l'ensemble des informations actives du logiciel. Dans ce cas toutefois, on diminue considérablement la surface occupée par le logiciel qui est utilisé de manière partagée. Ceci entraîne des difficultés de navigation et de lecture dans le logiciel. L'utilisation d'un écran de grande taille pour obtenir une taille suffisante de la fenêtre réservée au logiciel serait très coûteuse et accentuerait l'inconfort psychologique cité plus haut
- dans un autre mode d'utilisation, on dispose les fenêtres de travail en recouvrement, c'est à dire l'une par dessus l'autre à tour de rôle, la fenêtre en incrustation cachant une partie de la fenêtre en arrière-plan. Dans ces conditions, quand c'est la fenêtre vidéo qui est incrustée, elle cache une partie des informations du logiciel, ce qui crée des difficultés pour lire les informations et effectuer les commandes nécessaires. On peut toujours déplacer l'image vidéo à l'aide de la souris, mais ce n'est qu'un palliatif, aux résultats médiocres. Lorsqu'à l'inverse c'est l'écran du logiciel qui est incrusté dans l'écran vidéo, les informations affichées deviennent très petites et difficiles à lire et l'opérateur local ne voit plus qu'une partie du visage de son interlocuteur. Dans ce dernier cas on perd pratiquement la totalité des avantages provenant de la vision directe de l'interlocuteur et on créé une rupture de communication.

Par ailleurs, compte tenu de la qualité souvent médiocre des mini-enceintes utilisées pour restituer le son, celui-ci est en général mauvais, ce qui nuit aussi à la compréhension des interlocuteurs.

Enfin, l'utilisation d'un commutateur audio-vidéo, qui est nécessaire pour exploiter éventuellement les sources audiovisuelles complémentaires nécessite des manipulations nombreuses, qui peuvent elles-mêmes entraîner des ruptures de communication.

Pour surmonter ces inconvénients, l'invention propose un procédé de télétravail coopératif, tel que défini par l'ensemble des caractéristiques de la revendication 1.

Selon une autre caractéristique, le périphérique visiophonique (107) est placé à une distance de l'écran informatique (103) telle qu'elle oblige l'opérateur à tourner distinctement la tête pour passer de la vision de l'écran informatique à celle de l'écran visiophonique et vice-versa.

Selon une autre caractéristique, ladite liaison numérique s'effectue par l'intermédiaire d'une liaison par exemple de type Numéris ou ATM ou autre.

L'invention propose également un dispositif pour la mise en oeuvre de ce procédé, ce dispositif étant défini par l'ensemble des caractéristiques de la revendication 4

Selon une autre caractéristique, la taille de l'écran vidéo est comprise entre 5 et 10 pouces, soit 12,7 cm et 25,4 cm.

Selon une autre caractéristique, la caméra est si tuée au dessus et au milieu de l'écran vidéo à la distance minimale permise par les dimensions de ces deux organes.

Selon une autre caractéristique, le haut parleur et les moyens de prise de son ont une bande passante d'au moins 7000 Hz.

Ces moyens de prise de son peuvent être constitué par un microphone de haute qualité ou par une antenne acoustique.

Selon une autre caractéristique, le dispositif comprend en outre un ensemble d'entrées visiophoniques permettant de le relier à des sources extérieures d'images et de son telles qu'un magnétoscope, et un dispositif de commutation permettant de sélectionner l'une de ces sources.

Selon une variante, tous les éléments formant le dispositif pourront avantageusement êtres intégrés dans un habitacle formant une borne de communication.

D'autres particularités et avantages de l'invention apparaîtront clairement dans la description suivante, présentée à titre d'exemple non limitatif, en regard des dessins annexés qui représentent :
- la figure 1, un schéma en perspective cavalière d'un poste de travail destiné à être mis en réseau avec au moins un autre poste identique pour mettre en oeuvre le procédé selon l'invention;
- la figure 2, une variante de réalisation du poste de travail ou dispositif conforme à l'invention.

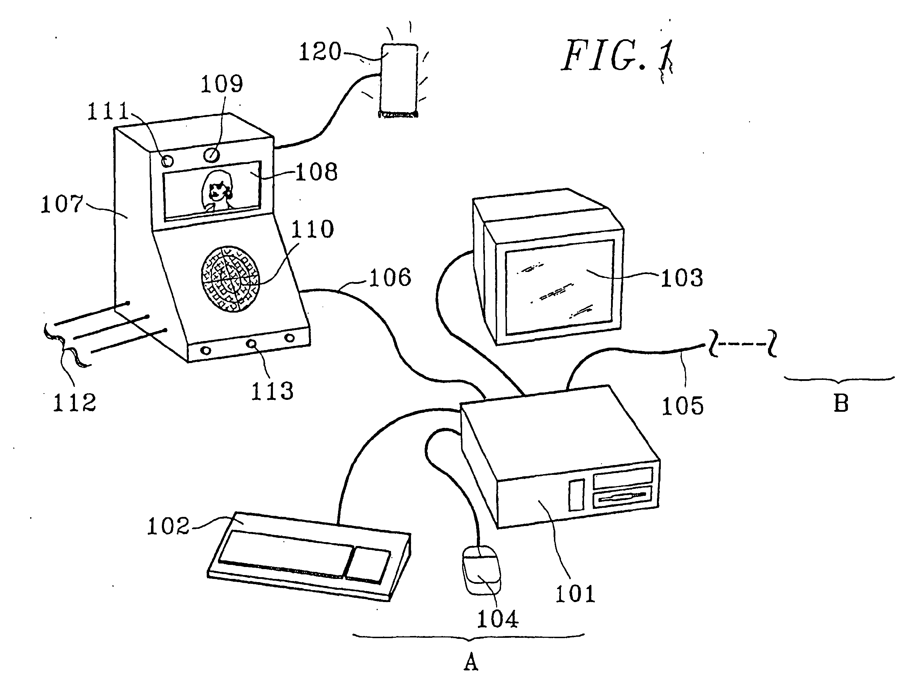

Le poste de travail représenté sur la figure 1 annexée comprend un ordinateur personnel de type standard, " PC " par exemple, composé d'une unité centrale 101 reliée à un clavier 102, à un écran de visualisation 103 et à une souris 104.

L'unité centrale est munie de tous les dispositifs connus et habituels pouvant être utiles à son fonctionnement, tels que des lecteurs de disquettes, de CD-ROM ...

L'ensemble comportera le cas échéant d'autres dispositifs tels qu'un scanner, connus et utiles pour l'exploitation du logiciel qui est implanté dans l'unité centrale. Ce logiciel fonctionnera en mode partagé avec des logiciels identiques et/ou complémentaires installés dans les autres unités centrales reliées à celle-ci. L'ensemble sera organisé pour fonctionner en réseau de manière connue.

La mise en réseau s'effectue par l'intermédiaire d'une connexion 105. Dans le cas où les postes sont situés dans des lieux géographiquement distincts, on utilisera de préférence le réseau téléphonique commuté Numéris (marque déposée par France Télécom) ou des liaisons ATM qui permet de transmettre aussi bien les données que le son et la vidéo dans des conditions tout à fait satisfaisantes de débit et de qualité ou toute autre liaison numérique.

Selon l'invention, l'unité centrale 101 est en outre munie d'une carte visiophonique, du type Z220 ou Z250 ou Z350 de chez Zydacron par exemple, comportant des entrées/sorties vidéo et audio. Cette carte permet de numériser des signaux vidéo et audio entrant qui sont ensuite traités par l'unité centrale pour être transmis au poste de travail éloigné par l'intermédiaire de la liaison 105, en étant multiplexés avec les données numériques concernant le fonctionnement du logiciel proprement dit. A l'inverse, les données vidéo et audio provenant par la liaison 105 des postes éloignés, sont démultiplexés puis convertis par ladite carte en signaux audio et vidéo analogiques disponibles sur ces sorties.

Cette carte est reliée de manière bidirectionnelle tant au point de vue vidéo qu'audio, par un ensemble de connexions 106 à un périphérique 107 qui permet selon l'invention d'assurer l'interfaçage visuel et auditif avec l'opérateur du poste de travail.

Ce périphérique se présente, dans le mode de réalisation représenté sur la figure 1, sous la forme d'un boîtier plus haut que large qui comporte une base prismatique laquelle repose par sa partie large sur la table de travail de l'opérateur. La partie supérieure étroite de cette base se prolonge par une partie mince formant un parallélépipède rectangle de faible épaisseur.

Cette partie mince comporte sur sa face avant un écran de visualisation 108, de préférence à cristal liquide (LCD).

Les dimensions de cet écran sont à la fois suffisamment grandes pour permettre un bon confort d'observation et suffisamment petites pour que l'axe de la caméra qui va être décrite plus loin ne soit pas trop éloigné du centre de l'écran. L'expérience a montré qu'une dimension comprise entre 5 et 10 pouces selon les notations habituellement utilisées dans l'art, convenait tout à fait, c'est à dire correspondant à un écran de 12,5 cm ou 25,4 cm environ.

Cet écran permet donc de visualiser l'image de l'interlocuteur qui utilise un poste de travail éloigné relié à celui de la figure par la liaison 105.

Pour retransmettre l'image de l'opérateur du poste de la figure, on utilise une caméra miniature 109 , du type à CCD par exemple. Cette caméra est située dans la partie supérieure du périphérique 107 juste au dessus et au milieu de l'écran vidéo 108 à la distance minimale permise par les dimensions de ces deux organes.

Les paroles de la personne visualisée sur l'écran 108 sont retransmises par un haut-parleur 110 situé dans la partie prismatique du périphérique 107 et contenu dans une enceinte de volume et de caractéristiques suffisantes pour délivrer un son de bonne qualité, par exemple d'une bande passante de 7 kHz avec une courbe de réponse suffisamment plate.

Dans le sens inverse, les paroles de l'opérateur du poste de la figure sont reprises par des moyens de prise de son tel qu'un microphone 111 de bonne qualité, du type à électret par exemple, intégré au niveau de la face avant du périphérique 107 à un endroit permettant d'éviter l'effet Larsen (de manière connue le plus loin possible du haut parleur). Ce microphone sera lui aussi d'une bonne qualité, adaptée à la qualité du haut-parleur 110. Selon une autre variante on pourra utiliser une antenne acoustique 120

A titre de variante, une prise auxiliaire, non représentée sur la figure, permet de brancher un microphone portatif que l'opérateur pourra tenir à la main de façon à minimiser l'influence des bruits ambiants. Au même titre on pourra brancher une antenne accoustique 120.

Également à titre de variante, l'invention propose en outre de munir le périphérique 107 d'un ensemble de connexions 112 sélectionnables par une ensemble de boutons 113 situés de préférence en façade du périphérique.

Ces connexions permettront de brancher des sources externes vidéo et/ou audio telles que par exemple une caméra pour filmer des documents, ou un magnétoscope.

Pour l'utilisation du poste de travail, on placera le périphérique 107 à une distance marquée de l'écran 103, de telle manière que lorsque l'opérateur converse avec l'opérateur distant dont l'image est représentée sur l'écran 108, il soit amené à détourner la tête de l'écran 103 pour regarder l'écran 108. Ainsi on reconstitue une attitude habituelle de travail en commun, dans laquelle les opérateurs regardent en alternance l'écran informatique pour rechercher des informations sur celui-ci, puis un autre opérateur pour converser avec lui au sujet des informations contenues sur l'écran et/ou des actions à entreprendre.

Ce dialogue correspond donc à un changement de posture des personnes concernées, qui en particulier effectuent des mouvements marqués de la tête pour regarder d'une part l'écran et d'autre part leurs interlocuteurs. On reconstitue ainsi une ambiance naturelle de travail, qui est psychologiquement beaucoup plus agréable pour l'opérateur. En outre celui-ci peut remarquer par lui même la posture de son partenaire lequel est par exemple plongé dans un document, n'écoute plus, semble ne pas suivre, ou regarde l'écran visiophonique en cherchant de l'aide. Il peut alors adapter son comportement à la situation ainsi observée, et par exemple attirer l'attention de son interlocuteur, ou engager la conversation au moment le plus favorable.

Ce comportement est donc particulièrement induit par d'une part l'écartement entre l'écran informatique 103 et le périphérique visiophonique 108 et d'autre part par le rapprochement entre le centre de l'écran visiophonique 108 et la pupille de la caméra 109.

L'expérimentation a montré qu'il y avait un changement important de comportement de la part de la plupart des utilisateurs, ainsi qu'une amélioration de la perception de l'utilité de l'utilisation d'un système visiophonique pendant la séance de travail. On améliore ainsi considérablement l'efficacité d'un tel travail, tout particulièrement quand les opérateurs sont situés à des endroits qui peuvent être très éloignés l'un de l'autre, via l'utilisation d'un réseau numérique.

Pour fabriquer les périphériques 107, on utilise une technologie tout à fait courante et disponible sur le marché. Les connexions se feront ainsi par exemple à l'aide de prises RCA de type classique. L'alimentation sera de préférence obtenue à partir d'un bloc d'alimentation externe.

Selon les caractéristiques de la carte d'adaptation située dans l'unité centrale, et de l'écran de visualisation 108, l'un et/ou l'autre pouvant être soit du type PAL soit du type VGA, on utilisera soit une liaison directe soit un adaptateur PAL/VGA ou VGA/PAL de type courant.

La figure 1, illustre un dispositif conforme à l'invention adapté au cas où les utilisateurs disposent d'un équipement informatique tel qu'un micro-ordinateur type PC.

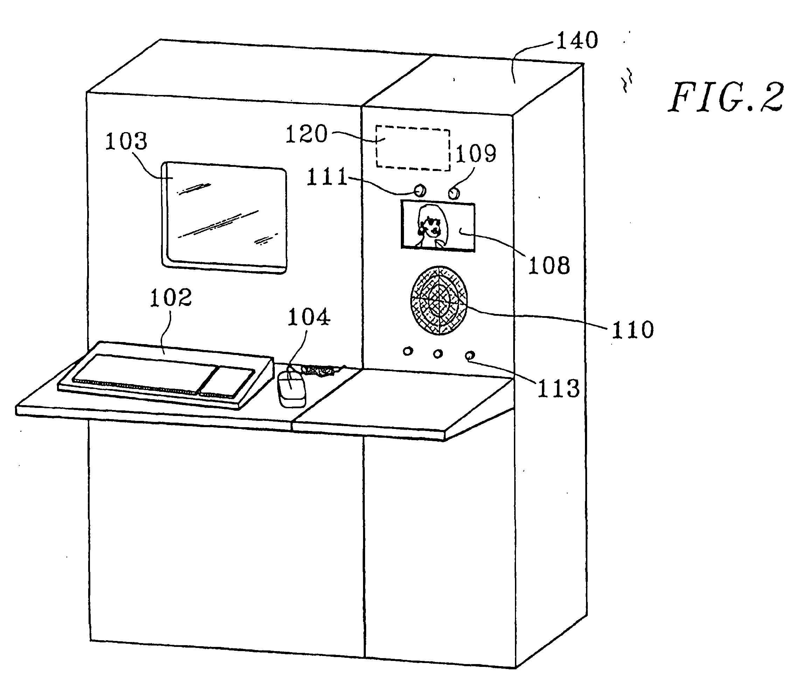

La figure 2, est une variante de réalisation du dispositif selon laquelle tous les éléments de l'invention sont intégrés dans un habitacle ou borne de communication 140. Les éléments 101, 105, 106 et 112 sont dissimulés dans le meuble. Le haut-parleur 110 peut être disposé à un autre endroit sur la borne. L'élément de prise de son peut être une antenne acoustique 120 (représentée en pointillé) et peut donc être disposé à un autre endroit sur la partie supérieure de la borne par exemple.

Exemple de valeur pour un mode préféré de réalisation :
- distance entre le centre des deux écrans 103 et 108 : 40cm à 70cm pour un utilisateur placé de 50cm à 1 m des écrans.
- L'angle entre les deux écrans est par exemple compris entre 30 et 40 degrés.

## Revendications

1. Procédé de télétravail coopératif, dans le quel au moins un opérateur local (A) et un opérateur distant (B) sont munis d'équipements informatiques respectifs, les équipements respectifs étant reliés l'un à l'autre par une liaison numérique et comprenant chacun au moins une unité centrale et un écran informatique, et dans lequel ces opérateurs échangent des données numériques pour le fonctionnement en commun d'un même logiciel, tout en échangeant des informations par l'intermédiaire d'une liaison visiophonique elle-même supportée par ladite liaison numérique, **caractérisé en ce qu'**il comprend les opérations consistant à:
- relier à l'unité centrale de chaque opérateur un périphérique visiophonique séparé de l'écran informatique de cet opérateur, ce périphérique visiophonique étant muni d'un écran vidéo distinct affichant des informations concernant l'opérateur distant et de moyens de capture de son et d'image produisant des signaux de sortie respectifs et provenant de l'opérateur local;
- multiplexer avec les données numériques concernant le fonctionnement du logiciel, et transmettre à destination de l'autre équipement, les signaux de sortie des moyens de capture de son et d'image de chaque équipement; et
- démultiplexer et diriger vers le périphérique visiophonique de chaque équipement, les signaux de sortie des moyens de capture son et d'image reçus de l'autre équipement à travers ladite liaison numérique.

2. Procédé selon la revendication 1, **caractérisé en ce que** le périphérique visiophonique (107) de chaque opérateur est placé à une telle distance de l'écran informatique (103)de cet opérateur qu'elle oblige cet opérateur à tourner distinctement la tête pour passer de la vision de son écran informatique à celle de son écran visiophonique (108) et vice versa.

3. Procédé selon l'une quelconque des revendications 1 et 2 **caractérisé en ce que** ladite liaison numérique (105) s'effectue par l'intermédiaire d'une liaison de type Numéris ou ATM.

4. Dispositif pour la mise en ouvre du procédé selon l'une quelconque des revendications 1 à 3, du type comprenant un équipement informatique incluant au moins une unité centrale, un écran informatique, et une sortie pour un liaison numérique filaire, **caractérisé en ce qu'**il comprend en outre un périphérique visiophonique muni d'un écran vidéo de taille réduite prévu pour afficher des informations concernant un opérateur distant, d'un haut parleur prévu pour restituer le son provenant de l'opérateur distant, d'une caméra située à proximité immédiate de l'écran vidéo, et de moyens de prise de son prévus pour capturer des informations provenant d'un opérateur local, et **en ce que** l'unité centrale comprend une carte d'interface numérique/analogique à laquelle le périphérique visiophonique est relié par une liaison visiophonique analogique, et des moyens de multiplexage reliés à la sortie pour la liaison numérique filaire.

5. Dispositif selon la revendication 4, **caractérisé en ce que** la taille de l'écran vidéo est comprise entre 5 et 10 pouces (12,7 ou 25,4 cm).

6. Dispositif selon l'une quelconque des revendications 4 et 5, **caractérisé en ce que** la caméra est située au dessus et au milieu de l'écran vidéo (108) à la distance minimale permise par les dimensions de ces deux organes.

7. Dispositif selon l'une quelconque des revendications 4 à 6, **caractérisé en ce que** le haut parleur (110) et les moyens de prise de son (111) ont une bande passante d'au moins 7000 Hz.

8. Dispositif selon la revendication 7, **caractérisé en ce que** les moyens de prise du son comportent un microphone (111).

9. Dispositif selon la revendication 7, **caractérisé en ce que** les moyens de prise du son comportent une antenne acoustique (120).

10. Dispositif selon l'une quelconque des revendications 4 à 7, **caractérisé en ce qu'**il comprend en outre un ensemble d'entrées visiophoniques (112) permettant de le relier à des sources extérieures d'images et de son telles qu'un magnétoscope, et un dispositif de commutation (113) permettant de sélectionner l'une de ces sources.

11. Dispositif selon l'une quelconque des revendications 4 à 10, **caractérisé en ce que** tous les éléments informatique, visiophonique, prise de son et écran sont intégrés dans une borne de communication (140).

## Claims

1. Method of cooperative teleworking in which at least one local operator (A) and one remote operator (B) are furnished with respective items of computer equipment, the respective items of equipment being linked to one another by a digital link and each comprising at least one central unit and one computer screen, and in which these operators exchange digital data for the pooled operation of one and the same piece of software, while exchanging information by way of a videophone link itself supported by the said digital link, **characterized in that** it comprises the operations consisting in:
- linking to the central unit of each operator a videophone peripheral separate from the computer screen of this operator, this videophone peripheral being furnished with a distinct video screen displaying information relating to the remote operator and with sound and image capture means producing respective output signals and originating from the local operator;
- multiplexing with the digital data relating to the operation of the software, and transmitting to the other item of equipment, the output signals from the sound and image capture means of each item of equipment; and
- demultiplexing and directing to the videophone peripheral of each item of equipment, the output signals of the sound and image capture means received from the other item of equipment through the said digital link.

2. Method according to Claim 1, **characterized in that** the videophone peripheral (107) of each operator is placed at such a distance from the computer screen (103) of this operator that it obliges this operator to turn his head distinctly in order to switch from viewing his computer screen to viewing his videophone screen (108) and vice versa.

3. Method according to any one of Claims 1 and 2, **characterized in that** the said digital link (105) is effected by way of a link of Numeris or ATM type.

4. Device for the implementation of the method according to any one of Claims 1 to 3, of the type comprising a item of computer equipment including at least one central unit, a computer screen, and an output for a wire digital link, **characterized in that** it furthermore comprises a videophone peripheral furnished with a video screen of small size provided so as to display information relating to a remote operator, with a loudspeaker provided so as to restore the sound originating from the remote operator, with a camera situated in immediate proximity to the video screen, and with sound pick-up means provided for capturing information originating from a local operator, and **in that** the central unit comprises a digital/analogue interface card to which the videophone peripheral is linked by an analogue videophone link, and multiplexing means linked to the output for the wire digital link.

5. Device according to Claim 4, **characterized in that** the size of the video screen lies between 5 and 10 inches (12.7 or 25.4 cm).

6. Device according to any one of Claims 4 and 5, **characterized in that** the camera is situated above and in the middle of the video screen (108) at the minimum distance permitted by the dimensions of these two facilities.

7. Device according to any one of Claims 4 to 6, **characterized in that** the loudspeaker (110) and the sound pick-up means (111) have a bandwidth of at least 7000 Hz.

8. Device according to Claim 7, **characterized in that** the sound pick-up means comprise a microphone (111).

9. Device according to Claim 7, **characterized in that** the sound pick-up means comprise an acoustic antenna (120).

10. Device according to any one of Claims 4 to 7, **characterized in that** it furthermore comprises a set of videophone inputs (112) making it possible to link it to exterior sources of images and of sound, such as a video recorder, and a switching device (113) making it possible to select one of these sources.

11. Device according to any one of Claims 4 to 10, **characterized in that** all the computer, videophone sound pick-up and screen elements are integrated into a communication box (140).

## Patentansprüche

1. Verfahren zur kooperativen Telearbeit, bei dem mindestens ein lokaler Operator (A) und ein ferner Operator (B) mit Datenverarbeitungseinrichtungen versehen sind, wobei die jeweiligen Einrichtungen miteinander über eine digitale Verbindung verbunden sind und je mindestens eine Zentraleinheit und einen EDV-Bildschirm aufweisen, und bei dem diese Operatoren digitale Daten für den gemeinsamen Betrieb der gleichen Software austauschen und gleichzeitig Informationen über eine Bildtelefonverbindung austauschen, die selbst von der digitalen Leitung unterstützt wird, **dadurch gekennzeichnet, dass** es die folgenden Vorgänge aufweist :
- Verbinden eines vom EDV-Bildschirm des Operators getrennten Bildtelefon-Peripheriegeräts mit der Zentraleinheit jedes Operators, wobei dieses Bildtelefon-Peripheriegerät mit einem getrennten Videobildschirm, der Informationen bezüglich des fernen Operators anzeigt, und mit Ton- und Bildaufnahmemitteln versehen ist, die Ausgangssignale erzeugen, die vom lokalen Operator stammen;
- Multiplexieren der Ausgangssignale der Ton- und Bildaufnahmemittel jeder Einrichtung mit den digitalen Daten betreffend den Betrieb der Software und Übertragen an die andere Einrichtung; und
- Demultiplexieren und Senden der Ausgangssignale der Ton- und Bildaufnahmemittel, die von der anderen Einrichtung empfangen wurden, über die digitale Verbindung an das Bildtelefon-Peripheriegerät jeder Einrichtung.

2. Verfahren nach Anspruch 1, **dadurch gekennzeichnet, dass** das Bildtelefon-Peripheriegerät (107) jedes Operators in einer solchen Entfernung zum EDV-Bildschirm (103) dieses Operators angeordnet ist, dass dieser Operator gezwungen ist, deutlich den Kopf zu drehen, um von der Ansicht seines EDV-Bildschirms zu derjenigen seines Bildtelefon-Bildschirms (108) überzugehen und umgekehrt.

3. Verfahren nach einem der Ansprüche 1 und 2, **dadurch gekennzeichnet, dass** die digitale Verbindung (105) über eine Verbindung vom Typ Numéris oder ATM geht.

4. Vorrichtung zur Anwendung des Verfahrens nach einem der Ansprüche 1 bis 3, von der Art, die eine Datenverarbeitungseinrichtung aufweist, die mindestens eine Zentraleinheit, einen EDV-Bildschirm und einen Ausgang für eine digitale Drahtverbindung aufweist, **dadurch gekennzeichnet, dass** sie außerdem ein Bildtelefon-Peripheriegerät aufweist, das mit einem Videobildschirm reduzierter Größe, der vorgesehen ist, um Informationen betreffend einen fernen Operator anzuzeigen, mit einem Lautsprecher, der vorgesehen ist, um den vom fernen Operator kommenden Ton wiederzugeben, mit einer Kamera, die in direkter Nähe des Videobildschirms angeordnet ist, und mit Tonaufnahmemitteln versehen ist, um vom lokalen Operator kommende Informationen zu erfassen, und dass die Zentraleinheit eine Digital/Analog-Schnittstellenkarte, mit der das Bildtelefon-Peripheriegerät über eine analoge Bildtelefonverbindung verbunden ist, und Multiplexiermittel aufweist, die mit dem Ausgang für die digitale Drahtverbindung verbunden sind.

5. Vorrichtung nach Anspruch 4, **dadurch gekennzeichnet, dass** die Größe des Videobildschirms zwischen 5 und 10 Zoll (12,7 oder 25,4 cm) liegt.

6. Vorrichtung nach einem der Ansprüche 4 und 5, **dadurch gekennzeichnet, dass** die Kamera sich oberhalb und in der Mitte des Videobildschirms (108) in der von den Abmessungen dieser beiden Organe erlaubten Mindestentfernung befindet.

7. Vorrichtung nach einem der Ansprüche 4 bis 6, **dadurch gekennzeichnet, dass** der Lautsprecher (110) und die Tonaufnahmemittel (111) eine Bandbreite von mindestens 7000 Hz haben.

8. Vorrichtung nach Anspruch 7, **dadurch gekennzeichnet, dass** die Tonaufnahmemittel ein Mikrophon (111) aufweisen.

9. Vorrichtung nach Anspruch 7, **dadurch gekennzeichnet, dass** die Tonaufnahmemittel eine akustische Antenne (120) aufweisen.

10. Vorrichtung nach einem der Ansprüche 4 bis 7, **dadurch gekennzeichnet, dass** sie außerdem eine Einheit von Bildtelefoneingängen (112), die es ermöglichen, sie mit externen Bild- und Tonquellen, wie zum Beispiel einem Videorecorder, zu verbinden, und eine Umschaltvorrichtung (113) aufweist, die es ermöglicht, eine dieser Quellen auszuwählen.

11. Vorrichtung nach einem der Ansprüche 4 bis 10, **dadurch gekennzeichnet, dass** alle EDV-, Bildtelefon-, Tonaufnahme- und Bildschirmelemente in ein Kommunikations-Endgerät (140) integriert sind.
